(19) Europäisches Patentamt
European Patent Office
Office européen des brevets

(11) **EP 2 582 143 A2**

(12) **EUROPEAN PATENT APPLICATION**
published in accordance with Art. 153(4) EPC

(43) Date of publication:
**17.04.2013 Bulletin 2013/16**

(51) Int Cl.:
**H04N 13/02** (2006.01)  **G06T 15/00** (2011.01)

(21) Application number: **11792608.9**

(22) Date of filing: **07.04.2011**

(86) International application number:
**PCT/KR2011/002443**

(87) International publication number:
**WO 2011/155697 (15.12.2011 Gazette 2011/50)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.06.2010 KR 20100053963**

(71) Applicant: **SK Planet Co., Ltd.**
**Seoul 100-999 (KR)**

(72) Inventors:
• **WOO, Dae Sic**
**Seoul 100-754 (KR)**
• **JEON, Byoung Ki**
**Seoul 133-070 (KR)**

• **KIM, A Ran**
**Seoul (KR)**
• **LEE, Hong Woo**
**Seongnam Si, Gyeonggi-do 463-050 (KR)**
• **HA, Jong Ho**
**Anyang Si, Gyeonggi-do 431-769 (KR)**
• **PARK, Ji Hoon**
**Seoul 139-240 (KR)**
• **CHUNG, Won Suk**
**Seoul 134-072 (KR)**

(74) Representative: **Isarpatent**
**Patent- und Rechtsanwälte**
**Friedrichstrasse 31**
**80801 München (DE)**

(54) **METHOD AND DEVICE FOR CONVERTING THREE-DIMENSIONAL IMAGE USING DEPTH MAP INFORMATION**

(57) One embodiment of the present invention relates to a method and a apparatus for converting a three-dimensional image using depth map information. The apparatus comprise a depth map estimation unit which estimates the depth map information for each pixel present in each frame of input image data, a depth map application unit which moves each pixel by the depth map information in the X-axis direction, a 3D image interpolation unit which, when a blank pixel occurs in the frame due to the movement, forms an interpolated pixel in the blank pixel by applying a weight to adjacent pixels of the blank pixel, and a 3D image rendering processing unit which renders a left-eye image and a right-eye image to which the interpolated pixel is applied.

**Fig. 1**

EP 2 582 143 A2

**Description**

[Technical Field]

An embodiment of the present invention relates to a method and apparatus for converting three-dimensional (3D) images using depth map information. More particularly, the present invention relates to a method and apparatus for converting 3D images using depth map information, which can render a 2D image similar to a 3D image taken by a stereo camera by interpolating blank pixel information so as to improve occlusion occurring when creating 3D image content by converting input 2D image content using depth map information about the corresponding content.

[Background Art]

With the rapid development of digital technologies and with the diversification of broadcast media due to the convergence of broadcasting and telecommunications, value-added services related to the broadcasting have recently emerged. At present, while the development of video services such as TV broadcasting is directed toward high-definition and large-screen technologies, only 2D image content is provided so far, and thus a viewer cannot perceive a 3D effect from the current 2D image content.

Accordingly, the need for 3D images has gradually increased, but there is a noticeable lack of 3D image content so far. 3D image processing is a key technology in the field of next-generation information technology services and is also a state-of-the-art technology with increased competition together with the development of information industrial society. The 3D image processing technology is an essential element to provide high-quality video services and is applied to a variety of fields such as broadcasting, medical, education, military, games, and virtual reality as well as the information technology field.

Thus, a technology for providing 3D image content by converting 2D image content is required. However, when 2D image content is converted into 3D image content by the current technologies, an object on a screen is not harmonious with a background image, which increases a viewer's eye fatigue during long time watching and does not allow the viewer to perceive an improved 3D effect.

[Disclosure]

[Technical Problem]

Accordingly, the present invention has been made to solve the above-described problems, and an object of an embodiment of the present invention is provide to a method and apparatus for converting 3D images using depth map information, which provides an occlusion technique for rendering a 2D image similar to a 3D image taken by a stereo camera.

[Technical Solution]

An embodiment of the present invention to accomplish the above objects provides an apparatus for converting three-dimensional (3D) images using depth map information, the apparatus comprising: a depth map estimation unit which estimates the depth map information for each pixel present in each frame of input image data; a depth map application unit which moves each pixel by the depth map information in the X-axis direction; a 3D image interpolation unit which, when a blank pixel occurs in the frame due to the movement, forms an interpolated pixel in the blank pixel by applying a weight to adjacent pixels of the blank pixel; and a 3D image rendering processing unit which renders a left-eye image and a right-eye image to which the interpolated pixel is applied.

According another object of the present invention, there is provided an apparatus for converting 3D images using depth map information, the apparatus comprising:

a depth map estimation unit which estimates the depth map information for each pixel present in each frame of input image data;
a depth map application unit which moves each pixel by the depth map information in the X-axis direction; and
a 3D image rendering processing unit which renders a left-eye image and a right-eye image based on the movement.

According still another object of the present invention, there is provided a method for converting 3D images using depth map information, the method comprising: a depth map estimation step of estimating the depth map information for each pixel present in each frame of input image data; a depth map application step of moving each pixel by the depth map information in the X-axis direction; a 3D image interpolation step of, when a blank pixel occurs in the frame due to the movement, forming an interpolated pixel in the blank pixel by applying a weight to adjacent pixels of the blank pixel; and a 3D image rendering processing step of rendering a left-eye image and a right-eye image to which the interpolated pixel is applied.

According yet another object of the present invention, there is provided a method for converting 3D images using depth map information, the method comprising: a depth map estimation step of estimating the depth map information for each pixel present in each frame of input image data; a depth map application step of moving each pixel by the depth map information in the X-axis direction; and a 3D image rendering processing step of rendering a left-eye image and a right-eye image based on the movement.

[Advantageous Effects]

As described above, according to an embodiment of the present invention, it is possible to render a 2D image similar to a 3D image taken by a stereo camera by interpolating a blank pixel occurring when creating 3D image content by converting input 2D image content using depth map information about the corresponding content.

Moreover, according to an embodiment of the present invention, it is possible to create a 3D effect while preserving the original form of an object such as a letter of a subtitle when a 2D image having a significant change in depth map information between adjacent pixels, such as the subtitle, is converted into a 3D image.

[Description of Drawings]

FIG. 1 is a block diagram schematically showing an apparatus for converting 3D images in accordance with an embodiment of the present invention.

FIG. 2 is a flowchart illustrating a method for converting 3D images using depth map information in accordance with an embodiment of the present invention.

FIG. 3 is an illustrative diagram showing the generation of a left-eye image and a right-eye image based on depth map information in accordance with an embodiment of the present invention.

FIG. 4 is an illustrative diagram showing a blank pixel and a blank pixel group in accordance with an embodiment of the present invention.

FIG. 5 is an illustrative diagram showing the generation direction a left-eye image and a right-eye image in accordance with an embodiment of the present invention.

FIG. 6 is an illustrative diagram showing changes in the position of images when a 2D image is converted into a right-eye image in accordance with an embodiment of the present invention.

FIG. 7 is an illustrative diagram showing how an object of a 2D image is converted into a left-eye image and a right-eye image in accordance with an embodiment of the present invention.

FIG. 8 is an illustrative diagram showing how a letter of a 2D image is converted into a left-eye image and a right-eye image in accordance with an embodiment of the present invention.

[Mode for Invention]

Hereinafter, exemplary embodiments of the present invention will be described with reference to the accompanying drawings. In the following description, the same elements will be designated by the same reference numerals although they are shown in different drawings. Further, in the following description of the present invention, a detailed description of known functions and configurations incorporated herein will be omitted when it may make the subject matter of the present invention rather unclear.

In addition, terms such as first, second, A, B, (a), (b), etc. may be used herein when describing components of the present invention. Each of these terminologies is not used to define an essence, order or sequence of a corresponding component but used merely to distinguish the corresponding component from other components. It should be noted that if it is described in the specification that one component is "connected," "coupled" or "joined" to another component, a third component may be "connected," "coupled," and "joined" between the first and second components, although the first component may be directly connected, coupled or joined to the second component.

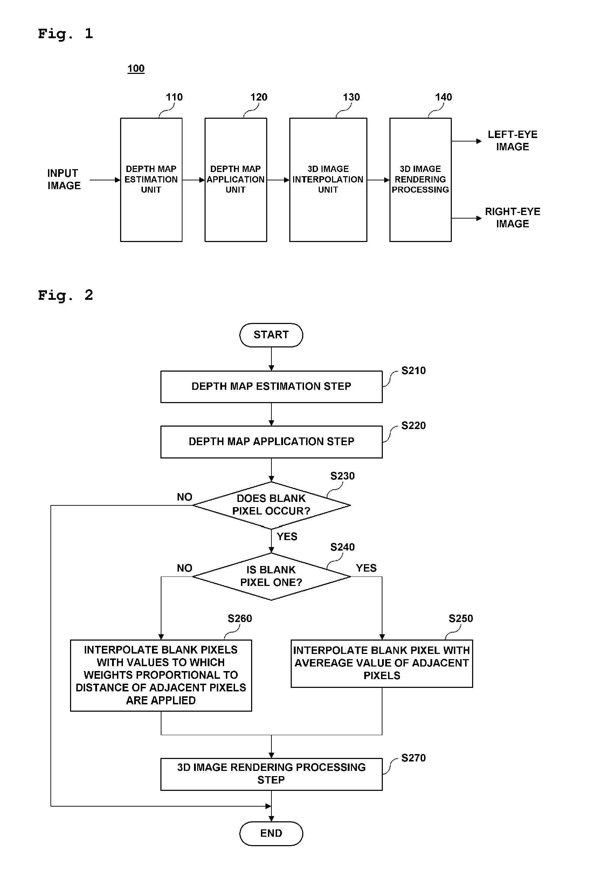

FIG. 1 is a block diagram schematically showing an apparatus for converting 3D images in accordance with an embodiment of the present invention.

An apparatus 100 for converting 3D images in accordance with an embodiment of the present invention comprises a depth map estimation unit 110, a depth map application unit 120, a 3D image interpolation unit 130, and a 3D image rendering processing unit 140. Meanwhile, while it is described that the apparatus 100 for converting 3D images comprises only the depth map estimation unit 110, the depth map application unit 120, the 3D image interpolation unit 130, and the 3D image rendering processing unit 140 in an embodiment of the present invention, this is intended merely to illustrate the technical idea of an embodiment of the present invention, and those skilled in the art to which the present invention pertains will appreciate that various modifications and changes are made to the components of the apparatus 100 for converting 3D images without departing from the essential features of an embodiment of the present invention.

The apparatus 100 for converting 3D images in accordance with an embodiment of the present invention refers to an apparatus which converts input images into 3D images. That is, the apparatus 100 for converting 3D images refers to an apparatus which can receive 2D image data from an image content provider such as a broadcasting station and convert the received 2D image data into 3D images before displaying the 2D image data. Here, the apparatus 100 for converting 3D images may be mounted in a display device such as a TV, monitor, etc. or may be implemented as a separate device such as a set-top box and connected to the display device. Accordingly, only the conversion of an input image into a left-eye image and a right-eye image for a 3D image, which is performed by the apparatus 100 for converting 3D images, will be described in the present invention, and the display of the 3D image in a stereoscopic or auto-stereoscopic manner, which is performed by the display device, will not be described separately.

The 3D image described in the present invention may be defined in two aspects. First, the 3D image may be defined as an image to which the depth map information is applied such that a user can feel that a part of the image is projected from a screen. Second, the 3D image may be defined as an image which provides various viewpoints to a user such that the user can feel the sense of reality from the image. That is, the 3D image described in the present invention refers to an image which allows a viewer to perceive an audio-visual 3D effect, thus providing the sense of vitality and reality. The 3D image may be classified into a stereoscopic type, a multi-view type, an integral photography (IP) type, a multi-view (omni) type, a panorama type, and a hologram type based on acquisition method, depth impression, and display method. Methods for displaying 3D images may include image-based reconstruction and mesh-based representation.

Moreover, the 3D image may be displayed by depth image-based rendering (DIBR). The depth image-based rendering refers to a method for creating images at different viewpoints using reference images having information on the depth, differential angle, etc. in each related pixel. The depth image-based rendering can easily render an inexpressible and complex shape of a 3D model and enable the application of signal processing such as general image filtering, thus producing high-quality 3D images. The depth image-based rendering uses a depth image and a texture image, which are captured by a depth camera and a multi-view camera.

Moreover, the depth image is an image which displays the distance between an object located in a 3D space and a camera taking the object in units of black and white. The depth image is used in 3D restoration or 3D warping through depth map information and camera parameters. Moreover the depth image is applied to a free viewpoint TV or 3D TV. The free viewpoint TV refers to a TV that allows a user to view an image from any viewpoint, not from a predetermined viewpoint, according to the selection of the user. The 3D TV provides an image obtained by adding a depth image to a 2D image. For smooth viewpoint transition in the free viewpoint TV and the 3D TV, it is necessary to generate an intermediate image, and thus it is necessary to estimate accurate depth map information. Meanwhile, in the present invention, the method for estimating the depth map information will be described in detail with reference to the depth map estimation unit 110.

The depth map estimation unit 110 estimates the depth map information for each pixel present in each frame of the input image data. Here, each pixel may comprise R, G, and B sub-pixels. Moreover, the input image data refers to 2D image data. Meanwhile, the depth map estimation unit 110 may use a stereo matching algorithm as a general method for estimating the depth map information. The stereo matching algorithm searches a surrounding image only in the horizontal direction to obtain a variation value and inputs an image captured with a parallel camera configuration or an image subjected to rectification only. The depth map information described in the present invention refers to information that indicates the sense of depth and may be called a Z-buffer.

Moreover, the depth map estimation unit 110 analyzes each frame to estimate the depth map information using at least one of information about the inclination of a screen, the shadow of an object, the focus of the screen, and the object pattern. For example, the depth map estimation unit 110 may estimate the depth map information by determining that an object located at the bottom of the screen in a frame is near and an object located at the top is far based on the inclination in the frame. Moreover, the depth map estimation unit 110 may estimate the depth map information by determining that a dark portion of an object in the frame is far and a bright portion of the object is near based on the shadow of the object. That is, this method uses the principle that the shadow is always behind the object. Moreover, the depth map estimation unit 110 may estimate the depth map information by determining that a sharp object is in front and a blurred object is at the rear based on the focus of the screen. Furthermore, the depth map estimation unit 110 may estimate the depth map information by determining that, if there are successive patterns of the same type, a large size pattern is in front of a small size pattern based on the object pattern.

Meanwhile, while the present invention describes that the apparatus 100 for converting 3D images extracts the depth map information from the input images through the depth map estimation unit 110, this is for the embodiment of the present invention, and the present invention is not necessarily limited to such an embodiment. That is, when the apparatus 100 for converting 3D images receives separate depth map information from the outside together with the input image, the apparatus 100 for converting 3D images may use the depth map information received from the outside without the need to extract the depth map information from the input image using the depth map estimation unit 110.

The depth map application unit 120 functions to move each pixel by the depth map information in the X-axis direction. The depth map application unit 120 renders a left-eye image and a right-eye image by adding or subtracting the dept map information to or from each pixel. The depth map application unit 120 moves each pixel to an X-axis pixel position obtained by adding the depth map information to each pixel such that the added pixels form the left-eye image. That is, the depth map application unit 120 sequentially applies the depth map information in a direction from the pixel position of $X_n$, the ending point of the X-axis coordinate in the frame, to the pixel position of $X_0$, the starting point of the X-axis coordinate, thus rendering the left-eye image.

The depth map application unit 120 moves each pixel to an X-axis pixel position obtained by subtracting the depth map information from each pixel such that the subtracted pixels form the right-eye image. That is, the depth map application unit 120 sequentially applies the depth map information in a direction from the pixel position of $X_0$, the starting point of the X-axis coordinate in the frame, to the pixel position of $X_n$, the ending point of the X-axis coordinate, thus rendering the right-eye image. Meanwhile, the depth map application unit 120 recognizes an object whose movement is detectable by comparison of the current frame and a reference frame, which is the previous or future frame, and moves the pixel corresponding to the object by the depth map information in the X-axis direction. Here, while it is preferred that the depth map application unit 120 apply the depth map information to both the object and the background in the frame, according to the embodiment of the present invention, the depth map information may be applied to only the object by separating the object from the background in the frame.

When a blank pixel occurs in the frame due to the movement of pixels, the 3D image interpolation unit 130 functions to form an interpolated pixel in the blank pixel by applying a predetermined weight to adjacent pixels of the blank pixel. Here, the blank pixel refers to a pixel to which no pixel information is input. If there is one blank pixel, the 3D image interpolation unit 130 applies the weight such that the blank pixel has an average value of the adjacent pixels. The 3D image interpolation unit 130 forms an interpolated pixel with a value obtained by multiplying the same constant to a left adjacent pixel and a right adjacent pixel corresponding to the adjacent pixels of the blank pixel and then adding the left adjacent pixel and the right adjacent pixel to which the same constant is multiplied. If there is a plurality of blank pixels 410, i.e., a blank pixel group 420, the 3D image interpolation unit 130 applies constants proportional to the distances between a specific blank pixel to be interpolated, among the blank pixel group 420, and adjacent pixels as weights. The 3D image interpolation unit 130 forms the interpolated pixels with values obtained by multiplying constants proportional to the distances between the blank pixel group 420 and a leftmost adjacent pixel and between the blank pixel group 420 and a rightmost adjacent pixel and then adding the leftmost adjacent pixel and the rightmost adjacent pixel to which the constants proportional to the distances are multiplied. Meanwhile, the 3D image rendering processing unit 140 functions to render the left-eye image and the right-eye image to which the interpolated pixels are applied. Such movement of pixels to convert the pixels of the 2D image included in the 2D image data into the left-eye image and the right-eye image for the 3D image refers to occlusion.

FIG. 2 is a flowchart illustrating a method for converting 3D images using depth map information in accordance with an embodiment of the present invention.

An apparatus 100 for converting 3D images receives 2D image data from an image content provider such as a broadcasting station. A depth map estimation unit 110 of the apparatus 100 for converting 3D images estimates depth map information for each pixel present in each frame of the input image data (S210). The depth map estimation unit 110 analyzes each frame to estimate the depth map information using at least one of information about the inclination of a screen, the shadow of an object, the focus of the screen, and the object pattern.

The depth map application unit 120 of the apparatus 100 for converting 3D images moves each pixel by the depth map information in the X-axis direction (S220). That is, the depth map application unit 120 of the apparatus 100 for converting 3D images renders a left-eye image and a left-eye image by adding or subtracting the dept map information to or from each pixel. In more detail, the depth map application unit 120 of the apparatus 100 for converting 3D images moves each pixel to an X-axis pixel position obtained by adding the depth map information to each pixel such that the added pixels form the left-eye image. That is, the depth map application unit 120 of the apparatus 100 for converting 3D images sequentially applies the depth map information in a direction from the pixel position of $X_n$, the ending point of the X-axis coordinate in the frame, to the pixel position of $X_0$, the starting point of the X-axis coordinate, thus rendering the left-eye image. The depth map application unit 120 of the apparatus 100 for converting 3D images moves each pixel to an X-axis pixel position obtained by subtracting the depth map information from each pixel such that the subtracted pixels form the right-eye image. That is, the depth map application unit 120 of the apparatus 100 for converting 3D images sequentially applies the depth map information in a direction from the pixel position of $X_0$, the starting point of the X-axis coordinate in the frame, to the pixel position of $X_n$, the ending point of the X-axis coordinate, thus rendering the right-eye image.

The 3D image interpolation unit 130 of the apparatus 100 for converting 3D images determines whether a blank pixel 410 occurs in the frame due to the movement of pixels (S230). If it is determined at step S230 that the blank pixel 410 occurs, the 3D image interpolation unit 130 of the apparatus 100 for converting 3D images determines whether there is one blank pixel 410 (S240).

If it is determined at step S240 that there is one blank pixel 410, the 3D image interpolation unit 130 of the apparatus 100 for converting 3D images forms an interpolated pixel in the blank pixel by applying a weight such that the blank pixel has an average value of the adjacent pixels (S250). That is, the 3D image interpolation unit 130 of the apparatus 100 for converting 3D images forms the interpolated pixel with a value obtained by multiplying the same constant to a left adjacent pixel and a right adjacent pixel corresponding to the adjacent pixels of the blank pixel and then adding the left adjacent pixel and the right adjacent pixel to which the same constant is multiplied.

Meanwhile, if it is determined at step S240 that the blank pixel 410 is not one, the 3D image interpolation unit 130 of the apparatus 100 for converting 3D images determines that the blank pixel 410 is a blank pixel group 420 comprising a plurality of blank pixels 420 and forms the interpolated pixels in the blank pixels by applying constants proportional to the distances between a specific blank pixel to be interpolated, among the blank pixel group 420, and adjacent pixels as weights (S260). That is, the 3D image interpolation unit 130 of the apparatus 100 for converting 3D images forms the interpolated pixels with values obtained by multiplying constants proportional to the distances between the blank pixel group 420 and a leftmost adjacent pixel and between the blank pixel group 420 and a rightmost adjacent pixel and then adding the leftmost adjacent pixel and the rightmost adjacent pixel to which the constants proportional to the distances are multiplied. The 3D image rendering processing unit 140 of the apparatus 100 for converting 3D images renders the left-eye image and the right-eye image to which the interpolated pixels are applied (S270).

While it is described in FIG. 2 that steps S210 to S270 are sequentially performed, this is intended merely to illustrate the technical idea of an embodiment of the present invention, and those skilled in the art to which the present invention pertains will appreciate that various modifications and changes are made to the method for converting 3D images shown in FIG. 2 in such a manner that the sequence shown in FIG. 2 is changed or at least two of steps S210 to S270 are performed in parallel, and thus FIG. 2 is not limited in time-series order.

As mentioned above, the method for converting 3D images in accordance with an embodiment of the present invention shown in FIG. 2 may be implemented as a program and recorded in a computer-readable recording medium. The computer-readable recording medium, in which the program for implementing the method for converting 3D images in accordance with an embodiment of the present invention is recorded, comprises all types of recording devices in which data readable by a computer system is stored. Examples of the computer-readable recording medium may include ROMs, RAMs, CD-ROMs, magnetic tape, floppy discs, optical data storage devices, etc. Moreover, the computer-readable recording medium may be implemented in the form of carrier wave (e.g., transmission through the Internet). Furthermore, the computer-readable recording media may be distributed in computer systems connected through the network such that a computer-readable code can be stored and executed in a distributed manner. In addition, functional programs, code, and code segments for implementing the embodiment of the present invention can be easily construed by programmers skilled in the art to which the present invention pertains.

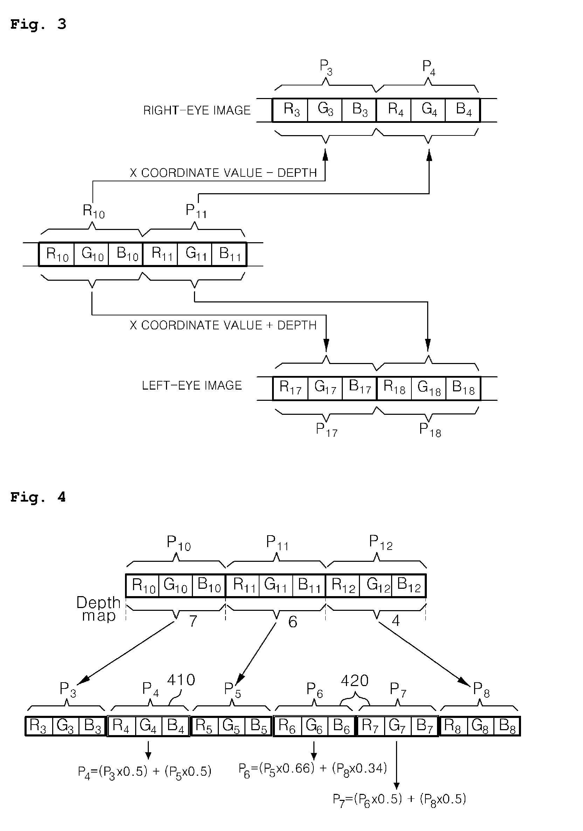

FIG. 3 is an illustrative diagram showing the generation of a left-eye image and a right-eye image based on depth map information in accordance with an embodiment of the present invention.

The depth map application unit 120 moves each pixel by the depth map information in the X-axis direction. The depth map application unit 120 renders a left-eye image and a right-eye image by adding or subtracting the depth map information to or from each pixel. The depth map application unit 120 moves each pixel to an X-axis pixel position obtained by subtracting the depth map information from each pixel such that the subtracted pixels form the right-eye image. As shown in FIG. 3, in order to generate a right-eye image for a 3D image using the depth map information of each pixel extracted from the input 2D image, the apparatus 100 for converting 3D images moves an X-axis value of the input image to the left by the depth map information of the corresponding pixel. That is, as shown in FIG. 3, if it is assumed that the depth map information about $P_{10}$, the tenth pixel of the X-axis, is 7, the depth map application unit 120 subtracts 7 corresponding to the depth map information from $P_{10}$, the tenth pixel, such that $P_{10}$ is moved to the pixel position of $P_3$, thus rendering the right-eye image. Here, the depth map application unit 120 sequentially applies the depth map information in a direction from the pixel position of $X_0$, the starting point of the X-axis coordinate in the frame, to the pixel position of $X_n$, the ending point of the X-axis coordinate, thus rendering the right-eye image. That is, in the case of the right-eye image, if the depth map information of the tenth and eleventh pixels is 7, respectively, the tenth pixel is moved to the third pixel position of the right-eye image, and the eleventh pixel is moved to the adjacent fourth pixel position, thus maintaining the continuity of pixels. Meanwhile, in this case, according to each pixel position and its depth map information, a blank pixel 410 where no pixel data is present may occur in the middle of the adjacent pixels.

The depth map application unit 120 moves each pixel to an X-axis pixel position obtained by adding the depth map information to each pixel such that the added pixels form the left-eye image. In other words, as shown in FIG. 3, in order to generate a left-eye image for a 3D image using the depth map information of each pixel extracted from the input 2D image, the apparatus 100 for converting 3D images moves an X-axis value of the input image to the right by the depth map information of the corresponding pixel. That is, as shown in FIG. 3, if it is assumed that the depth map

information about $P_{10}$, the tenth pixel of the X-axis, is 7, the depth map application unit 120 adds 7 corresponding to the depth map information to $P_{10}$, the tenth pixel, such that $P_{10}$ is moved to the pixel position of $P_{17}$, thus rendering the left-eye image. Here, the depth map application unit 120 sequentially applies the depth map information in a direction from the pixel position of $X_n$, the ending point of the X-axis coordinate in the frame, to the pixel position of $X_n$, the starting point of the X-axis coordinate, thus rendering the left-eye image. That is, in the case of the left-eye image, if the depth map information of the tenth and eleventh pixels is 7, respectively, the tenth pixel is moved to the seventeenth pixel position of the left-eye image, and the eleventh pixel is moved to the adjacent eighteenth pixel position, thus maintaining the continuity of pixels. Meanwhile, in this case, according to each pixel position and its depth map information, a blank pixel 410 where no pixel data is present may occur in the middle of the adjacent pixels.

FIG. 4 is an illustrative diagram showing a blank pixel and a blank pixel group in accordance with an embodiment of the present invention.

As shown in FIG. 4, when the apparatus 100 for converting 3D images converts an input image into a right-eye image by moving each pixel to an X-axis position, obtained by subtracting the depth map information from each pixel, a blank pixel 410 where no pixel data is present may occur in the middle of the adjacent pixels. That is, as shown in FIG. 4, if it is assumed that the depth map information about $P_{10}$, the tenth pixel of the X-axis, is 7 and the depth map information about $P_{11}$, the eleventh pixel of the X-axis, is 6, the depth map application unit 120 subtracts 7 corresponding to the depth map information from $P_{10}$, the tenth pixel, such that $P_{10}$ is moved to the pixel position of $P_3$, and subtracts 6 corresponding to the depth map information from $P_{11}$, the eleventh pixel, such that $P_{11}$ is moved to the pixel position of $P_5$, thus rendering the right-eye image. In this case, the blank pixel 410 where no pixel data is present may occur at $P_4$ which is between $P_3$ and $P_5$.

Accordingly, when the blank pixel 410 occurs due to the movement of pixels, the apparatus 100 for converting 3D images forms an interpolated pixel in the blank pixel by applying a predetermined weight to adjacent pixels of the blank pixel using the 3D image interpolation unit 130, thus interpolating the blank pixel. That is, if there is one blank pixel 410 such as $P_4$ between $P_3$ and $P_5$, the 3D image interpolation unit 130 applies the weight such that the blank pixel has an average value of the adjacent pixels such as $P_3$ and $P_5$, thus forming an interpolated pixel at $P_4$. In more detail, the 3D image interpolation unit 130 forms the interpolated pixel with a value obtained by multiplying the same constant 0.5 to the left adjacent pixel $P_3$ and the right adjacent pixel $P_5$ and then adding the left adjacent pixel ($P_3$ x 0.5) and the right adjacent pixel ($P_5$ x 0.5) to which the same constant is multiplied.

In the foregoing description, R, G, and B sub-pixels included in $P_4$ can be represented by formula 1.

$$[\text{Formula 1}]$$

$$R_4 = (R_3 \times 0.5) + (R_5 \times 0.5)$$

$$G_4 = (G_3 \times 0.5) + (G_5 \times 0.5)$$

$$B_4 = (B_3 \times 0.5) + (B_5 \times 0.5)$$

Meanwhile, as shown in FIG. 4, if it is assumed that the depth map information about $P_{11}$, the eleventh pixel of the X-axis, is 6 and the depth map information about $P_{12}$, the twelfth pixel of the X-axis, is 4, the depth map application unit 120 subtracts 6 corresponding to the depth map information from $P_{11}$, the eleventh pixel, such that $P_{11}$ is moved to the pixel position of $P_5$, and subtracts 4 corresponding to the depth map information from $P_{12}$, the twelfth pixel, such that $P_{12}$ is moved to the pixel position of $P_8$, thus rendering the right-eye image. In this case, a plurality of blank pixels 410 such as $P_6$ and $P_7$ may occur between $P_5$ and $P_8$.

Accordingly, in the case of a blank pixel group 420 comprising a plurality of blank pixels 410, the 3D image interpolation unit 130 applies constants 0.66 and 0.34 proportional to the distances between $P_6$, a specific blank pixel, and $P_5$ and $P_8$, the adjacent pixels, as weights. That is, the 3D image interpolation unit 130 forms the interpolated pixels with values obtained by multiplying constants 0.66 and 0.34 proportional to the distances between the blank pixel group 420 and $P_5$, a leftmost adjacent pixel, and between the blank pixel group 420 and $P_8$, a rightmost adjacent pixel and then adding the leftmost adjacent pixel ($P_5$ x 0.66) and the rightmost adjacent pixel ($P_8$ x 0.34) to which the constants proportional to the distances are multiplied. When the interpolated pixel is formed at $P_6$ in the above-described manner, an interpolated pixel is formed at $P_7$ by applying a weight such that the blank pixel has an average value of the adjacent pixels $P_6$ and $P_8$. In more detail, the 3D image interpolation unit 130 forms the interpolated pixel with a value obtained by multiplying the same constant 0.5 to the left adjacent pixel $P_6$ and the right adjacent pixel $P_8$ of the blank pixel $P_7$ and then adding the left adjacent pixel ($P_6$ x 0.5) and the right adjacent pixel ($P_8$ x 0.5) to which the same constant is multiplied.

In the foregoing description, R, G, and B sub-pixels included in $P_6$ can be represented by formula 2.

[Formula 2]

$$R_6 = (R_5 \times 0.66) + (R_8 \times 0.34)$$
$$G_6 = (G_5 \times 0.66) + (G_8 \times 0.34)$$
$$B_6 = (B_5 \times 0.66) + (B_8 \times 0.34)$$

Meanwhile, in the foregoing description, R, G, and B sub-pixels included in $P_7$ can be represented by the following formula 3. However, the weight is merely an embodiment, and thus various constants obtained by optimization may be applied. That is, the weight applied to each formula is merely a hypothesis to explain the embodiment for implementing the present invention, and various weights optimized for each situation may be applied in the process of substantially implementing the present invention.

[Formula 3]

$$R_7 = (R_6 \times 0.5) + (R_8 \times 0.5)$$
$$G_7 = (G_6 \times 0.5) + (G_8 \times 0.5)$$
$$B_7 = (B_6 \times 0.5) + (B_8 \times 0.5)$$

In the object present in the frame, an interpolated pixel may be formed in a blank pixel, i.e., an empty space where no pixel data of a virtual right-eye image for each depth map information is present, by the above-mentioned process. That is, in order to treat the left-eye image and the right-eye image in different manners, the direction of processing the left-eye image proceeds in the left-to-right direction of the original image, i.e., in a direction from $X_0$ to $X_n$. Here, pixel data with a large movement distance due to a large value of depth map information is overwritten with adjacent pixel data, and thus a virtual image with respect to the right side of the object is created. By the opposite principle, the image of the left side is reduced. Meanwhile, the direction of processing the left-eye image proceeds in a direction opposite to the direction of processing the right-eye image (in a direction from $X_n$ to $X_0$). Through this process, a virtual left image is created on the left side of each object, and the image of the right side is reduced by the opposite principle.

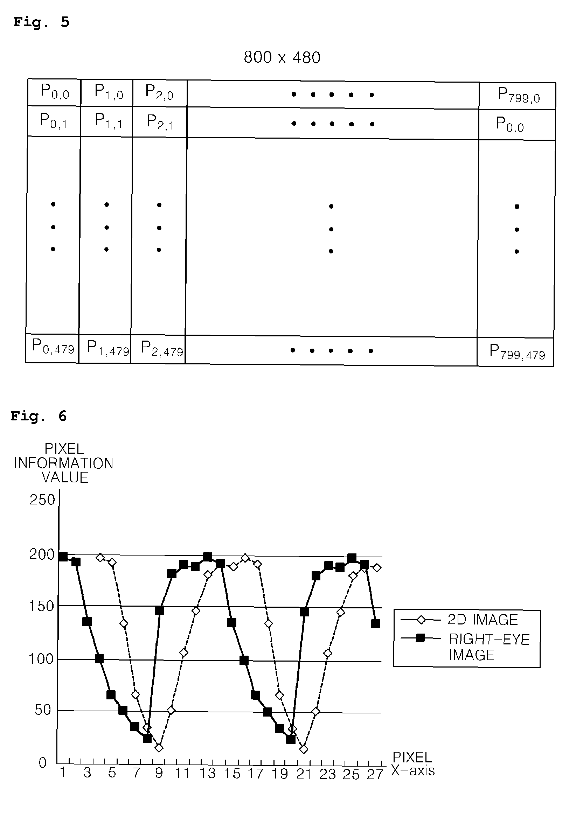

FIG. 5 is an illustrative diagram showing the generation direction a left-eye image and a right-eye image in accordance with an embodiment of the present invention.

As shown in FIG. 5, when the resolution of a frame is 800 x 480, the pixels lie in a direction from $P_{0.0}$ to $P_{799.0}$ with respect to the X-axis and in a direction from $P_{0.0}$ to $P_{0.479}$ with respect to the Y-axis. That is, in order to create the left-eye image, the apparatus 100 for converting 3D images sequentially applies the depth map information in a direction from the pixel position of $P_{799.0}$, the ending point of the X-axis coordinate in the frame, to the pixel position of $P_{0.0}$, the starting point of the X-axis coordinate. Meanwhile, in order to create the right-eye image, the apparatus 100 for converting 3D images sequentially applies the depth map information in a direction from the pixel position of $P_{0.0}$, the starting point of the X-axis coordinate in the frame, to the pixel position of $P_{799.0}$, the ending point of the X-axis coordinate. Meanwhile, as shown in FIG. 5, after the depth map information is applied from $P_{0.0}$ to $P_{799.0}$ or $P_{799.0}$ to $P_{0.0}$ with respect to the X-axis, the depth map information may be sequentially applied from $P_{0.1}$ to $P_{799.1}$ or $P_{799.1}$ to $P_{0.1}$.

FIG. 6 is an illustrative diagram showing changes in the position of images when a 2D image is converted into a right-eye image in accordance with an embodiment of the present invention.

Referring to FIG. 6, when an input 2D image is converted into a right-eye image, it can be seen from the width between the graph of the 2D image expressed as -◇- and the graph of the right-eye image expressed as -■- that the area corresponding to the right-eye image has an increased width and the area corresponding to the opposite direction has a reduced width according to the depth map information.

As shown in FIG. 6, in the case of an image having a significant change in depth map information between adjacent pixels, for example, when an image including many subtitles is converted into a 3D image, it is necessary to preserve the original form of the subtitles and provide a 3D effect. If the image having a significant change in depth map information between adjacent pixels such as the image including many subtitles is processed only by simple movement of pixels based on the depth map information, the depth map information between adjacent pixels may be reversed, which causes break of letters. This break of letters occurs more severely when the depth map information value increases during conversion with an increased 3D effect.

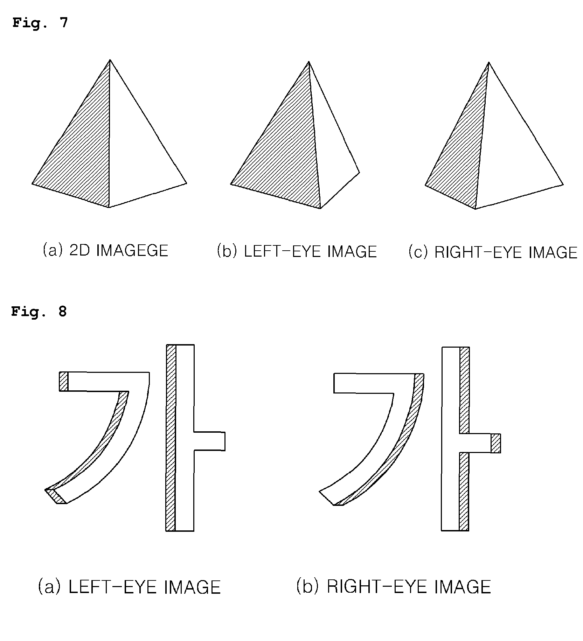

FIG. 7 is an illustrative diagram showing how an object of a 2D image is converted into a left-eye image and a right-eye image in accordance with an embodiment of the present invention.

As shown in FIG. 7, when viewing a 3D object as shown in (a) of FIG. 7 with human eyes, the images viewed by the left eye and the right eye are not the same. That is, when the object is viewed by the left eye, the left side of the object is viewed more than the right side as shown (b) of FIG. 7. Moreover, when the object is viewed by the right eye, the right side of the object is viewed more than the left side as shown in (c) of FIG. 7. That is, when the object as shown in (a) of FIG. 7 is taken by a stereo imaging system using two cameras, the same images as those viewed by the left and right eyes are taken, thus allowing a viewer to perceive a 3D effect, i.e., the spatial layout of the object.

However, when the 2D image data captured by one camera is converted into 3D image data, the 2D image data has no spatial information of an object, and thus it is necessary to create virtual spatial information using various features of the original image. In order to extract the virtual spatial information from the 2D image, there are various methods of using the edge, brightness, and focus of the image, the arrangement of objects, etc., and the 3D image is created by newly arranging each pixel image of the original image in the left and right direction using the spatial information created by these methods.

That is, the apparatus 100 for converting 3D images moves each pixel of the input image as shown in (a) of FIG 7 to an X-axis pixel position obtained by adding depth map information to each pixel such that the added pixels form the left-eye image. Moreover, the apparatus 100 for converting 3D images moves each pixel of the input image as shown in (a) of FIG 7 to an X-axis pixel position obtained by subtracting the depth map information from each pixel such that the subtracted pixels form the right-eye image.

FIG. 8 is an illustrative diagram showing how a letter of a 2D image is converted into a left-eye image and a right-eye image in accordance with an embodiment of the present invention.

As shown in FIG. 8, in the case of an image having a significant change in depth map information between adjacent pixels, for example, when an image including many subtitles is converted into a 3D image, it is necessary to preserve the original form of the subtitles and provide a 3D effect. If the image having a significant change in depth map information between adjacent pixels such as the image including many subtitles is processed only by simple movement of pixels based on the depth map information, the depth map information between adjacent pixels may be reversed, which causes break of letters. This break of letters occurs more severely when the depth map information value increases during conversion with an increased 3D effect. That is, the apparatus 100 for converting 3D images moves each pixel of an input image including an object such as "가" to an X-axis pixel position obtained by adding depth map information to each pixel such that the added pixels form a left-eye image as shown in (a) of FIG. 8. Moreover, the apparatus 100 for converting 3D images moves each pixel of the input image including the object such as "가" to an X-axis pixel position obtained by subtracting the depth map information from each pixel such that the subtracted pixels form a right-eye image as shown in (b) of FIG. 8.

Even if it was described above that all of the components of an embodiment of the present invention are coupled as a single unit or coupled to be operated as a single unit, the present invention is not necessarily limited to such an embodiment. That is, among the components, one or more components may be selectively coupled to be operated as one or more units. In addition, although each of the components may be implemented as an independent hardware, some or all of the components may be selectively combined with each other, so that they can be implemented as a computer program having one or more program modules for executing some or all of the functions combined in one or more hardwares. Codes and code segments forming the computer program can be easily conceived by an ordinarily skilled person in the technical field of the present invention. Such a computer program may implement the embodiments of the present invention by being stored in a computer readable storage medium, and being read and executed by a computer. A magnetic recording medium, an optical recording medium, a carrier wave medium, or the like may be employed as the storage medium.

In addition, since terms, such as "including," "comprising," and "having" mean that one or more corresponding components may exist unless they are specifically described to the contrary, it shall be construed that one or more other components can be included. All of the terminologies containing one or more technical or scientific terminologies have the same meanings that persons skilled in the art understand ordinarily unless they are not defined otherwise. A term ordinarily used like that defined by a dictionary shall be construed that it has a meaning equal to that in the context of a related description, and shall not be construed in an ideal or excessively formal meaning unless it is clearly defined in the present specification.

Although a preferred embodiment of the present invention has been described for illustrative purposes, those skilled in the art will appreciate that various modifications, additions and substitutions are possible, without departing from the scope and spirit of the invention as disclosed in the accompanying claims. Therefore, the embodiments disclosed in the present invention are intended to illustrate the scope of the technical idea of the present invention, and the scope of the present invention is not limited by the embodiment. The scope of the present invention shall be construed on the basis of the accompanying claims in such a manner that all of the technical ideas included within the scope equivalent to the claims belong to the present invention.

[Industrial Applicability]

As described above, the present invention can be applied to various fields that provide an occlusion technique for rendering a 2D image similar to a 3D image taken by a stereo camera. According to the present invention, when an image having a significant change in depth map information between adjacent pixels such as a subtitle in the 2D image is converted into a 3D image, it is possible to create a 3D effect while preserving the original form of an object such as a letter of the subtitle.

CROSS-REFERENCE TO RELATED APPLICATION

This application claims priority from and the benefit under 35 U.S.C. §119(a) of Korean Patent Application No. 10-2010-0053963, filed on June 8, 2010, which is hereby incorporated by reference for all purposes as if fully set forth herein. Further, this application claims the benefit of priority in other countries than U.S., which is hereby incorporated by reference herein.

**Claims**

1. An apparatus for converting three-dimensional (3D) images using depth map information, the apparatus comprising:

    a depth map estimation unit which estimates the depth map information for each pixel present in each frame of input image data;
    a depth map application unit which moves each pixel by the depth map information in the X-axis direction;
    a 3D image interpolation unit which, when a blank pixel occurs in the frame due to the movement, forms an interpolated pixel in the blank pixel by applying a weight to adjacent pixels of the blank pixel; and
    a 3D image rendering processing unit which renders a left-eye image and a right-eye image to which the interpolated pixel is applied.

2. The apparatus of claim 1, wherein when there is one blank pixel, the 3D image interpolation unit applies the weight such that the blank pixel has an average value of the adjacent pixels.

3. The apparatus of claim 2, wherein the 3D image interpolation unit forms the interpolated pixel with a value obtained by multiplying the same constant to a left adjacent pixel and a right adjacent pixel corresponding to the adjacent pixels of the blank pixel and then adding the left adjacent pixel and the right adjacent pixel to which the same constant is multiplied.

4. The apparatus of claim 1, wherein when there is a blank pixel group comprising a plurality of blank pixels, the 3D image interpolation unit applies constants proportional to the distances between a specific blank pixel to be interpolated, among the blank pixel group, and adjacent pixels as weights.

5. The apparatus of claim 4, wherein the 3D image interpolation unit forms the interpolated pixels with values obtained by multiplying constants proportional to the distances between the blank pixel group and a leftmost adjacent pixel and between the blank pixel group and a rightmost adjacent pixel and then adding the leftmost adjacent pixel and the rightmost adjacent pixel to which the constants proportional to the distances are multiplied.

6. The apparatus of claim 1, wherein the depth map application unit renders the left-eye image and the right-eye image by adding or subtracting the depth map information to or from each pixel.

7. The apparatus of claim 6, wherein the depth map application unit moves each pixel to an X-axis pixel position obtained by adding the depth map information to each pixel such that the added pixels form the left-eye image.

8. The apparatus of claim 7, wherein the depth map application unit sequentially applies the depth map information in a direction from the pixel position of $X_n$, the ending point of the X-axis coordinate in the frame, to the pixel position of $X_0$, the starting point of the X-axis coordinate, thus rendering the left-eye image.

9. The apparatus of claim 6, wherein the depth map application unit moves each pixel to an X-axis pixel position obtained by subtracting the depth map information from each pixel such that the subtracted pixels form the right-eye image.

**10.** The apparatus of claim 9, wherein the depth map application unit sequentially applies the depth map information in a direction from the pixel position of $X_0$, the starting point of the X-axis coordinate in the frame, to the pixel position of $X_n$, the ending point of the X-axis coordinate, thus rendering the right-eye image.

**11.** The apparatus of claim 1, wherein the depth map estimation unit analyzes each frame to estimate the depth map information using at least one of information about the inclination of a screen, the shadow of an object, the focus of the screen, and the object pattern.

**12.** The apparatus of claim 1, wherein the depth map application unit recognizes an object whose movement is detectable by comparison of the current frame and a reference frame, which is the previous or future frame, and moves the pixel corresponding to the object by the depth map information in the X-axis direction.

**13.** The apparatus of claim 1, wherein each pixel comprises R, G, and B sub-pixels.

**14.** An apparatus for converting 3D images using depth map information, the apparatus comprising:

a depth map estimation unit which estimates the depth map information for each pixel present in each frame of input image data;
a depth map application unit which moves each pixel by the depth map information in the X-axis direction; and
a 3D image rendering processing unit which renders a left-eye image and a right-eye image based on the movement.

**15.** A method for converting 3D images using depth map information, the method comprising:

a depth map estimation step of estimating the depth map information for each pixel present in each frame of input image data;
a depth map application step of moving each pixel by the depth map information in the X-axis direction;
a 3D image interpolation step of, when a blank pixel occurs in the frame due to the movement, forming an interpolated pixel in the blank pixel by applying a weight to adjacent pixels of the blank pixel; and
a 3D image rendering processing step of rendering a left-eye image and a right-eye image to which the interpolated pixel is applied.

**16.** The method of claim 15, wherein the 3D image interpolation step comprises the step of, when there is one blank pixel, forming the interpolated pixel with a value obtained by multiplying the same constant to a left adjacent pixel and a right adjacent pixel corresponding to the adjacent pixels of the blank pixel and then adding the left adjacent pixel and the right adjacent pixel to which the same constant is multiplied.

**17.** The method of claim 16, wherein the 3D image interpolation step comprises the step of, when there is a blank pixel group comprising a plurality of blank pixels, forming the interpolated pixels with values obtained by multiplying constants proportional to the distances between the blank pixel group and a leftmost adjacent pixel and between the blank pixel group and a rightmost adjacent pixel and then adding the leftmost adjacent pixel and the rightmost adjacent pixel to which the constants proportional to the distances are multiplied.

**18.** The method of claim 15, wherein the depth map application step comprises the step of moving each pixel to an X-axis pixel position obtained by adding the depth map information to each pixel, and wherein the depth map information is sequentially applied in a direction from the pixel position of $X_n$, the ending point of the X-axis coordinate in the frame, to the pixel position of $X_0$, the starting point of the X-axis coordinate.

**19.** The method of claim 15, wherein the depth map application step comprises the step of moving each pixel to an X-axis pixel position obtained by subtracting the depth map information from each pixel, and wherein the depth map information is sequentially applied in a direction from the pixel position of $X_0$, the starting point of the X-axis coordinate in the frame, to the pixel position of $X_n$, the ending point of the X-axis coordinate.

**20.** A method for converting 3D images using depth map information, the method comprising:

a depth map estimation step of estimating the depth map information for each pixel present in each frame of input image data;
a depth map application step of moving each pixel by the depth map information in the X-axis direction; and
a 3D image rendering processing step of rendering a left-eye image and a right-eye image based on the movement.

Fig. 1

100

110          120          130          140

INPUT
IMAGE  →  DEPTH MAP
ESTIMATION
UNIT  →  DEPTH MAP
APPLICATION
UNIT  →  3D IMAGE
INTERPOLATION
UNIT  →  3D IMAGE
RENDERING
PROCESSING  →  LEFT-EYE
IMAGE

→  RIGHT-EYE
IMAGE

Fig. 2

START

DEPTH MAP ESTIMATION STEP — S210

DEPTH MAP APPLICATION STEP — S220

S230
DOES BLANK
PIXEL OCCUR?

NO

YES

S240
IS BLANK
PIXEL ONE?

NO            YES

S260
INTERPOLATE BLANK PIXELS
WITH VALUES TO WHICH
WEIGHTS PROPORTIONAL TO
DISTANCE OF ADJACENT PIXELS
ARE APPLIED

S250
INTERPOLATE BLANK PIXEL WITH
AVEREAGE VALUE OF ADJACENT
PIXELS

3D IMAGE RENDERING PROCESSING
STEP — S270

END

**Fig. 3**

$P_3$    $P_4$

RIGHT-EYE IMAGE | $R_3$ | $G_3$ | $B_3$ | $R_4$ | $G_4$ | $B_4$

X COORDINATE VALUE − DEPTH

$R_{10}$    $P_{11}$

| $R_{10}$ | $G_{10}$ | $B_{10}$ | $R_{11}$ | $G_{11}$ | $B_{11}$ |

X COORDINATE VALUE + DEPTH

LEFT-EYE IMAGE | $R_{17}$ | $G_{17}$ | $B_{17}$ | $R_{18}$ | $G_{18}$ | $B_{18}$ |

$P_{17}$    $P_{18}$

**Fig. 4**

$P_{10}$    $P_{11}$    $P_{12}$

| $R_{10}$ | $G_{10}$ | $B_{10}$ | $R_{11}$ | $G_{11}$ | $B_{11}$ | $R_{12}$ | $G_{12}$ | $B_{12}$ |

Depth map    7    6    4

$P_3$   $P_4$   410   $P_5$    $P_6$   420   $P_7$    $P_8$

| $R_3$ | $G_3$ | $B_3$ | $R_4$ | $G_4$ | $B_4$ | $R_5$ | $G_5$ | $B_5$ | $R_6$ | $G_6$ | $B_6$ | $R_7$ | $G_7$ | $B_7$ | $R_8$ | $G_8$ | $B_8$ |

$P_4 = (P_3 \times 0.5) + (P_5 \times 0.5)$    $P_6 = (P_5 \times 0.66) + (P_8 \times 0.34)$

$P_7 = (P_6 \times 0.5) + (P_8 \times 0.5)$

Fig. 5

800 x 480

| $P_{0,0}$ | $P_{1,0}$ | $P_{2,0}$ | • • • • • • | $P_{799,0}$ |
|---|---|---|---|---|
| $P_{0,1}$ | $P_{1,1}$ | $P_{2,1}$ | • • • • • • | $P_{0.0}$ |
| | | | | |
| $P_{0,479}$ | $P_{1,479}$ | $P_{2,479}$ | • • • • • | $P_{799,479}$ |

Fig. 6

**Fig. 7**

(a) 2D IMAGEGE          (b) LEFT-EYE IMAGE          (c) RIGHT-EYE IMAGE

**Fig. 8**

(a) LEFT-EYE IMAGE          (b) RIGHT-EYE IMAGE

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020100053963